# EUROPÄISCHE PATENTANMELDUNG

(11) **EP 0 841 514 A1**
(43) Veröffentlichungstag der Anmeldung: **13.05.1998**
(21) Anmeldenummer: 97112982.0
(22) Anmeldetag: 29.07.1997
(51) Int. Cl.: F16L 37/26

(54) **Steckverbindung**

(30) Priorität: 07.11.1996 DE 29619341 U
(71) Anmelder: ROBERT BOSCH GMBH, 70442 Stuttgart (DE)
(72) Erfinder: Schmuker, Franz, 73117 Wangen (DE); Prestle, Thomas, 72622 Nürtingen (DE); Öhrlein, Manfred, 73249 Wernau (DE); Kurz, Eberhard, Bi Gui Yuan, 23B Zhong Si Lu P.O. 528312 (CN)

(57) **Zusammenfassung**

Die Erfindung betrifft eine Steckverbindung an zwei Bauteilen (10, 24) mit senkrecht zueinander angeordneten Montageachsen (12, 26) und Bohrungen (16, 30), die insbesondere einen wasserführenden Kanal bilden, der mit einem 0-Ring (34) abgedichtet ist.

Es wird vorgeschlagen, daß beide Bauteile (10, 24) ebene, sich parallel zur Steckbewegung erstreckende Dichtflächen (18, 48) haben, in deren Bereich die Bohrungen (16, 30) ausmünden, daß der 0-Ring (34) an der einen Dichtfläche (48) radial geführt und axial abgestützt gehalten ist, und daß beide Bauteile (10, 24) parallel zur Steckbewegung angeordnete Führungsflächen (18, 46 bzw. 28, 44) haben, die bei der Steckbewegung die Bauteile in eine den 0-Ring (34) axial pressende, die Ausmündung der Bohrung (16) am anderen Bauteil (10) umgebende Stellung führt.

## Beschreibung

### Stand der Technik

Die Erfindung geht aus von einer Steckverbindung an zwei Bauteilen nach der Gattung des Hauptanspruchs. Bei Steckverbindungen dieser Gattung erscheint es in Anlehnung an bekannte Ausführungen mit parallelen Montageachsen als naheliegend, daß ein Bauteil mit einer im rechten Winkel in seine wasserführende Bohrung einmündende Aufnahmebohrung für einen entsprechend geformten Ansatz des anderen Bauteils zu versehen, der die wasserführende Bohrung dieses Bauteils enthält und an seinem Umfang einen radial dichtenden Bohrring trägt. Bei einer solchen Ausführung würde die Herstellung des mit der seitlichen Aufnahmebohrung versehenen Bauteils einen erhöhten Werkzeugaufwand und ggf. auch zusätzliche Mittel zum Verschließen des montageseitigen Bohrungsendes und zum Sichern der Steckverbindung erfordern.

### Vorteile der Erfindung

Die erfindungsgemäße Anordnung mit den Merkmalen des Hauptanspruchs hat den Vorteil, daß das eine Bauteil keinen seitlichen Anschlußstutzen für das andere Bauteil und keine Mittel zum Verschließen des montageseitigen Bohrungsendes benötigt.

Durch die in den Unteransprüchen aufgeführten Merkmale sind vorteilhafte Ausgestaltungen der Anordnung nach dem Hauptanspruch möglich.

Eine einfache und montagefreundliche Ausführung ergibt sich, wenn die Dichtfläche an dem einen Bauteil durch die Bodenfläche einer den O-Ring aufnehmenden Ringnut in einer Führungsfläche dieses Bauteils gebildet ist.

Bei einer solchen Ausführung wird die Fertigung des anderen Bauteils vereinfacht, wenn dessen Dichtfläche in einer Ebene mit dessen Führungsfläche liegt, die der den 0-Ring aufnehmenden Führungsfläche des ersten Bauteils gegenüberliegt.

Die Anordnung von zusätzlichen Mitteln zum Sichern der Steckverbinduung erübrigt sich, wenn die Bauteile mit Anschlagschultern zum Begrenzen der Steckbewegung und Verriegeln der Bauteile nach einer gegenseitigen Verdrehung um eine senkrecht zu den Führungsflächen stehende Achse versehen sind.

### Zeichnung

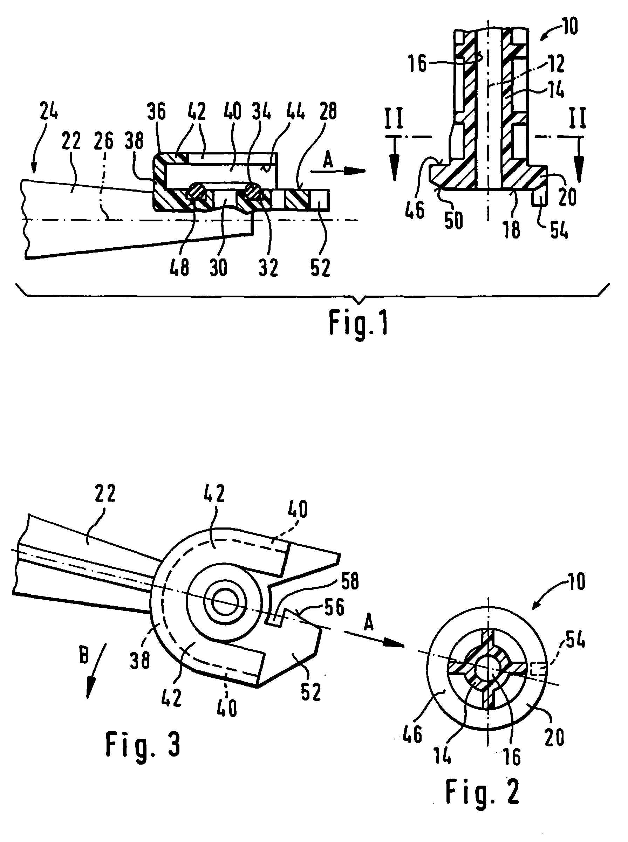

Ein Ausführungsbeispiel der Erfindung ist in der Zeichnung dargestellt und in der folgenden Beschreibung näher erläutert. Es zeigen Figur 1 eine Steckverbindung eines Ventils mit einem Manometer mit den montageseitigen, teilweise geschnitten dargestellten Endbereichen der beiden Bauteile vor ihrem Zusammenbau, Figur 2 einen Schnitt nach der Linie II-II in Figur 1 und Figur 3 eine Draufsicht auf den montageseitigen Bereich des Manometers nach Figur 1.

### Beschreibung des Ausführungsbeispiels

Ein Ventil 10 hat eine Montageachse 12, die in Einbaulage des Ventils senkrecht steht. Koaxial zur Montageachse 12 ist am Ventilgehäuse ein Anschlußstutzen 14 gebildet, der von einer wasserführenden Bohrung 16 durchsetzt ist. Die Bohrung 16 mündet unten an einer ebenen Stirnfläche 18 des Anschlußstutzens 14 aus, an welchem dort ein Ringbund 20 angeformt ist.

Die Stirnfläche 18 des Anschlußstutzens 14 dient als eine erste Führungsfläche für den Anschlußstutzen 22 eines Manometers 24, das in Richtung des Pfeiles A an das Ventil 10 ansteckbar ist. Parallel zu der dadurch vorgegebenen Montageachse 26 des Manometers 24 ist der Anschlußstutzen 22 mit einer ersten, ebenen Führungsfläche 28 versehen, die mit der Stirnseite 18 des Anschlußstutzens 14 zusammenwirkt. Von der Führungsfläche 28 geht eine wasserführende Bohrung 30 aus, die durch den Anschlußstutzen 22 hindurch zu den Anzeigemitteln des Manometers 24 führt.

In die erste Führungsfläche 28 des Anschlußstutzens 22 ist koaxial zu der Bohrung 30 eine Ringnut 32 eingearbeitet, die einen 0-Ring 34 radial geführt, aufnimmt. Am Anschlußstutzen 22 ist ferner ein von der ersten Führungsfläche 28 nach oben abstehender Kragen 36 gebildet, der einen koaxial zur Bohrung 30 stehenden halbkreisförmigen Abschnitt 38 hat, an den sich zwei parallel zur Montageachse 26 erstreckende Endabschnitte 40 anschließen. Der Kragen 36 hat oben über seine ganze Länge einen nach innen gekehrten Rand 42, auf dessen Unterseite eine zweite Führungsfläche 44 gebildet ist, die sich im Abstand parallel zur ersten Führungsfläche 28 erstreckt.

Die zweite Führungsfläche 44 am Anschlußstutzen 22 rückt mit einer zweiten Führungsfläche 46 am Anschlußstutzen 14 des Ventils 10 zusammen, die an der oberen Ringseite des Ringbundes 20 gebildet ist. Der Abstand der Führungsflächen 28, 44 am Anschlußstutzen 22 ist um ein geringes Bewegungsspiel größer als die Dicke des Ringbundes 20, so daß sich die Bauteile in der vorgeschriebenen Lage zusammenstecken lassen, bis der Abschnitt 38 des Kragens 36 am Ringbund 20 anschlägt, dabei wird der 0-Ring 34 axial zusammengepreßt und dicht an die Stirnfläche 18 des Anschlußstutzens 14, sowie an die Bodenfläche 48 der Ringnut 32 angedrückt.

Die Stirnfläche 18 am Anschlußstutzen 14 übt somit neben ihrer Führungsfunktion auch eine Dichtfunktion aus. Damit der 0-Ring 34 ungehindert auf die Stirnfläche 18 aufgleiten kann, ist deren äußerer Rand 50 leicht gewellt ausgeführt und außerdem ist dafür gesorgt, daß die Stirnfläche 18 frei von Trenngraten und dergleichen ist. Darüberhinaus ragen die Führungsflächen 28, 44 am Anschlußstutzen 22 in Richtung der Montageachse 26 soweit über den 0-Ring 34 hervor, daß die Führungsflächen an beiden Bauteilen bereits miteinander in Eingriff kommen, bevor der 0-Ring 34 auf die Stirnfläche 18 aufgleitet.

Der Anschlußstutzen 22 hat einen in Richtung seiner Montageachse 26 vorspringenden Ansatz 52, der beim Zusammenstecken der Bauteile auf eine über die Stirnfläche 18 des Anschlußstutzens 14 vorstehende Nase 54 auftrifft. Über eine Rampenfläche 56 am Ansatz 52 und nach einer Drehung des voll eingesteckten Anschlußstutzens 22 in Richtung des Pfeiles B gelangt die Nase 54 in eine Ausnehmung 58 im Ansatz 52, in der sie die Bauteile gegen unbeabsichtigtes Lösen sichert.

## Patentansprüche

1. Steckverbindung an zwei Bauteilen mit im wesentlichen senkrecht zueinander angeordneten Montageachsen und mit Bohrungen, die miteinander korrespondierend einen insbesondere wasserführenden Kanal bilden, dessen Hindurchführung mit einem zwischen beiden Bauteilen eingespannten 0-Ring abdichtbar ist, gekennzeichnet durch folgende Merkmale:
a) beide Bauteile (10, 24) haben einander zugekehrte, im wesentlichen ebene Dichtflächen (18, 48), die parallel zur Steckbewegung angeordnet sind und in deren Bereich die den Kanal bildenden Bohrungen (16, 30) ausmünden,
b) der 0-Ring (34) ist an der Dichtfläche (48) des einen Bauteils (24) in einer die Ausmündung der Bohrung (30) umgebenden Lage radial gefuhrt und axial abgestützt gehalten,
c) beide Bauteile (10, 24) haben einander zugekehrte, ebenfalls parallel zur Steckbewegung angeordnete Führungsflächen (18, 46 bzw. 28, 44), die beim Zusammemfügen der Bauteile vorzugsweise bereits vor dem Aufgleiten des 0-Rings (34) auf die gegenüberliegende Dichtfläche (18) miteinander in Eingriff kommen und bei der weiteren Steckbewegung die Bauteile (10, 24) in eine den 0-Ring (34) axial pressende, die Ausmündung der Bohrung (16) an der gegenüberliegenden Dichtfläche (18) umgebende Stellung führen.

2. Steckverbindung nach Anspruch 1, dadurch gekennzeichnet, daß die Dichtfläche (48) an dem einen Bauteil (24) durch die Bodenfläche einer den 0-Ring (34) aufnehmenden Ringnut (32) in einer Führungsfläche (28) dieses Bauteils (24) gebildet ist.

3. Steckverbindung nach Anspruch 2, dadurch gekennzeichnet, daß die Dichtfläche (18) an dem anderen Bauteil (10) in einer Ebene mit jener Führungsfläche (18) dieses Bauteils (10) liegt, die der den 0-Ring (34) aufnehmenden Führungsfläche (28) des anderen Bauteils (24) gegenüberliegt.

4. Steckverbindung nach einem der vorhergehenden Ansprüche, dadurch gekennzeichnet, daß die Bauteile (10, 24) mit Anschlagschultern (38, 52, 54, 58) zum Begrenzen der Steckbewegung und Verriegeln der Bauteile nach einer gegenseitigen Verdrehung um eine senkrecht zu den Führungsflächen (18, 28, 44, 46) stehende Achse (12) versehen sind.
